# EUROPEAN PATENT APPLICATION

(11) **EP 3 514 338 A1**
(43) Date of publication of application: **24.07.2019**
(21) Application number: 18213288.6
(22) Date of filing: 18.12.2018
(51) Int. Cl.: F01D 25/28, F01D 25/12, F02C 7/32, G06F 1/20, H05K 7/20

(54) **MOUNT WITH COOLING CONDUIT FOR A GAS TURBINE ENGINE UNIT**

(30) Priority: 18.01.2018 GB 201800778
(71) Applicant: Rolls-Royce plc, London SW1E 6AT (GB)
(72) Inventor: Rushton, Simon, Derby, Derbyshire DE24 8BJ (GB); Yang, Rong, Derby, Derbyshire DE24 8BJ (GB)
(74) Representative: Rolls-Royce plc

(57) **Abstract**

A mount for a gas turbine engine unit. The mount (104) comprises a unit interface (106) for securing the unit (102) to the mount. The unit interface comprises an internal cavity (112) in communication with a cooling aperture (124) to be overlaid by the unit secured to the unit interface. The mount further comprises a structural framework (108) for securing the mount to a casing of the gas turbine engine. The structural framework comprises an internal cooling conduit (132, 136, 138) for delivering cooling airflow from an air source to the internal cavity of the unit interface.

## Description

The present disclosure concerns a mount for a gas turbine engine unit.

In gas turbine engines, many units for various purposes must be attached to the engine and, in particular, to the engine casing. In some cases, units can be attached to the engine casing using a mount. Generally, the unit is attached to the mount, and the mount is attached to the engine casing.

In some cases, it may not be possible to locate a unit in its optimum position on the casing because the ambient temperature at that would be too great for the unit's safe operation or for the structural integrity of a mount. In such cases, or high-cost, temperature resistant materials may be used, or else the unit must be located elsewhere and an extended network of cabling or control lines must be provided to connect the unit to the necessary components of the engine. These solutions have drawbacks, as they may increase cost, weight, and complexity, and can add further potential failure points into the system.

Accordingly, it will be understood that improvements are desirable for mounting units to gas turbine engines.

According to a first aspect there is provided a mount for a gas turbine engine unit comprising: a unit interface for securing a unit to the mount, the unit interface comprising an internal cavity in communication with a cooling aperture to be overlaid by a unit secured to the unit interface; and a structural framework for securing the mount to a gas turbine engine, the structural framework comprising an internal cooling conduit for delivering cooling airflow from an air source to the internal cavity of the unit interface.

The mount may be for securing a unit to the gas turbine engine, in particular, to an engine casing of a gas turbine engine. The mount may elevate the unit away from the engine casing with the structural framework.

The unit interface may be a substantially box-like structure having the structural framework extending therefrom, or integrally formed therewith. In other examples, the unit interface and the structural framework may be formed separately and fixed together with a further manufacturing step, such as welding. The unit interface may comprise fixing elements, such as threaded holes or similar for securing a unit to the unit interface. The internal cavity of the unit interface may comprise a substantially open volume within the unit interface, or may comprise one or more conduits extending through the unit interface.

The structural framework may comprise a plurality of legs. Each of the plurality of legs may have a first end attached to the unit interface and a second end for securing to a gas turbine engine. The legs may be substantially straight, curved, or otherwise. The legs may be interconnected with one or more structural cross-bracing members.

The cooling conduit may extend through one or more of the plurality of legs. The cooling conduit may extend through all of the plurality of legs. If any structural cross-bracing members are present, the cooling conduit may also extend though the cross bracing members.

There may be more than one cooling conduit extending through the structural framework. A first internal cooling conduit may extend through a first number of the plurality of legs, and a second internal cooling conduit may extend through a second number of the plurality of legs. A cooling inlet may be provided in the structural framework for receiving cooling air from the air source. The cooling inlet may be provided in a casing interface of one or more of the plurality of legs.

At least one of the plurality of legs may comprise an internal passageway having an inlet and an outlet. In some examples, both the inlet and outlet may be located at the same end of the leg. In other examples, the inlet and outlet may be located at opposing ends of the leg, or at other positions on the leg, or elsewhere on the mount. The cooling conduit may extend from the air source to the internal cavity via the internal passageway of the leg. For the avoidance of doubt, the cooling conduit may comprise other internal passageways within the legs and other parts of the structural framework arranged in series or in parallel to transport cooling air from the air source to the internal cavity.

The internal passageways of the leg or legs may comprise a single inlet and single outlet. In some examples, both of the inlet and outlet may be located at the same end of the leg and, in particular, at the first end of the leg proximate the unit interface.

The internal passageway may extend from the inlet to the outlet along a path which extends along substantially an entire length of the leg. In some examples the internal passageway may be substantially U-shaped having its inlet and outlet at the first end of the leg.

The internal passageway may comprise a first passage for directing cooling air in a first direction along the leg and a second passage connected in series with the first passage for directing cooling air in a second direction along the leg.

The first and second passages of the internal passageway may be substantially linear passages which extend in an axial direction along the leg.

One of the first and second passages may be a helical passage and the other of the first and second passages may be an axial passage which extends in an axial direction along the leg. In some examples, the axial passage may extend within a helix of the helical passage. The axial passage may be circumscribed by the helical passage.

The mount may further comprise one or more bosses for spacing a unit apart from the cooling aperture.

The unit interface may comprise an interface surface to be overlaid by a unit. The interface surface may comprise an array of cooling apertures arranged to deliver cooling air from the internal cavity onto a unit secured to the unit interface. The interface surface may be configured to receive a unit directly against or in contact with the interface surface.

The unit is one or more of an electronic unit, an engine control unit, an engine system control unit, or any other device associated with the control and monitoring of a gas turbine engine.

In a second aspect, there is provided a unit mount apparatus comprising: a mount according to the first aspect; and a unit secured to the unit interface of the mount.

In a third aspect, there is provided a gas turbine engine comprising a mount according to the first aspect or a unit mount apparatus according to the second aspect.

The mount or unit mount apparatus may be attached to an engine casing of the gas turbine engine. The gas turbine engine may be configured to deliver cooling air to an inlet of the internal cooling conduit.

In a fourth aspect, there is provided a method of manufacturing a mount for a gas turbine engine unit comprising: producing a unit interface of a mount for securing a unit to the mount, the unit interface being configured to deliver cooling air from an internal cavity onto a unit secured to the unit interface; and producing, using additive layer manufacturing, a structural framework of a mount for securing the mount to a gas turbine engine, the structural framework comprising an internal cooling conduit for delivering cooling airflow from an air source to the internal cavity of the unit interface .

In some examples, the unit interface, or any other part of the mount may also be manufactured using additive layer manufacture.

The skilled person will appreciate that, except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is a schematic sectional view of a mount for a gas turbine engine unit;
**Figure 3A** is a schematic sectional view of a first leg of the mount along the line A-A in Figure 2;
**Figure 3B** is a schematic sectional view of a second leg of the mount along the line B-B in Figure 2; and
**Figure 4** is a schematic sectional view of the mount of Figure 2 attached to a gas turbine engine.

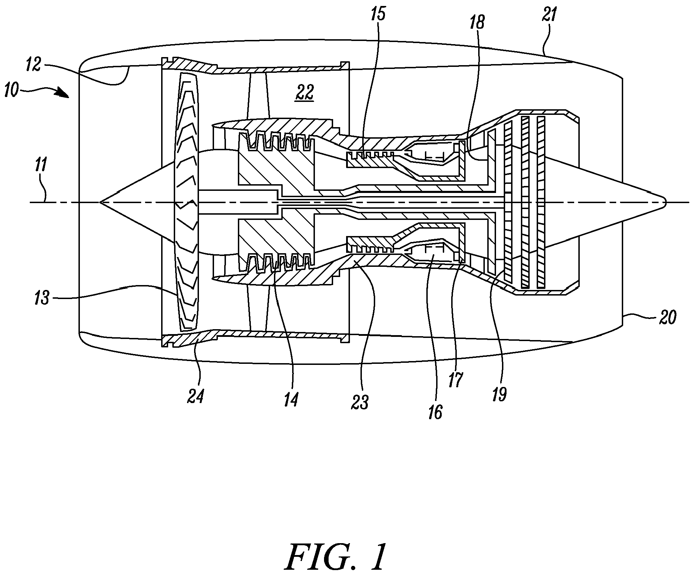

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the airflow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

The engine 10 comprises an inner annular casing 23 which houses the shaft, compressors, and turbines. An outer annular casing 24 is concentrically arranged about the inner casing 23 and houses the fan 13. The inner and outer casings 23, 24 provide a structural support within which the engine components are arranged and upon which components can be located.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

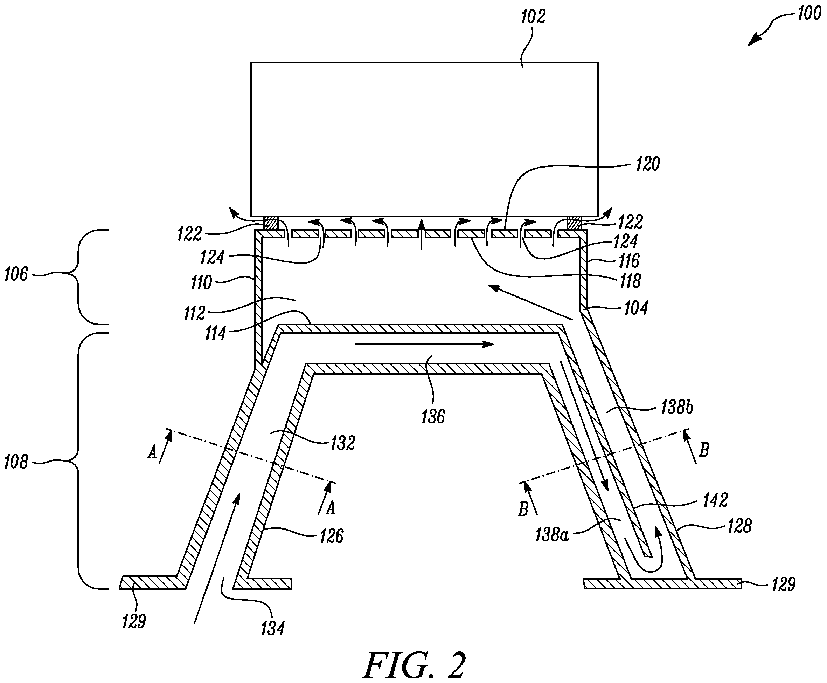

**Figure 2** illustrates a unit mount apparatus 100. The unit mount apparatus 100 comprises a unit 102 and a mount 104 for mounting the unit 102 on a gas turbine engine casing, such as inner or outer casing 23, 24 as described in relation to Figure 1 above.

The unit 102 is a unit for performing some function relating to the operation of a gas turbine engine which must be located on the engine casing. Unit 102 will not be described further, but it should be understood that many types of gas engine units are available and that the unit mount 104 may be bespoke for the particular unit 102 and its eventual location within the engine.

The mount 104 comprises a unit interface 106 and a structural framework 108. The unit interface 106 provides an interface for attachment to the unit 102 and is supported upon the structural framework 108, which can be attached to the gas turbine engine casing.

The unit interface 106 comprises a box-like structure 110 which defines an internal cavity 112. The box-like structure comprises a lower wall 114 (to which the structural framework 108 is attached), side walls 116, and an upper wall 118. These walls 114, 116, 118 define a volume which is the internal cavity 112.

The upper surface of the upper wall 118 defines an interface surface 120. The interface surface 120 is a surface of the mount 104 which is overlaid by the unit 102 when attached to the mount 104. The unit 102 can be releasably attached to the mount 104, for example using releasable fixings such as bolts, or permanently attached to the mount 104, for example by welding. The fixings are not shown in Figure 2, but is should be understood that the unit 102 can be fixed to the mount 104 with a variety of different methods.

In this example, a plurality of bosses 122 are provided at the periphery of the interface surface 120 in order to space the unit 102 apart from the interface surface 120. In other examples, the bosses may be omitted and the unit 102 may directly contact the interface surface 120 and, in yet other examples, the upper wall 118 may be omitted entirely, and the unit 102 placed to cover an upper aperture of the unit interface 106.

The upper wall 118 of the unit interface 106 also comprises a plurality of cooling apertures 124 which provide communication between the internal cavity 112 and the exterior space above the upper wall 118. The function of these cooling apertures 124 will be described more fully below.

Turning now to the structural framework 108, it will be seen that the framework comprises a first leg 126 and a second leg 128. The legs 126, 128 are connected directly at their upper ends to the unit interface 106 and extend generally downwardly and away from the unit 102. The legs 126,128 serve to elevate the unit interface 106, and thus the unit 102, from the casing to which the mount 104 is attached. In some examples, many more legs will be provided, but for ease of understanding, only two legs 126, 128 are illustrated here. In some examples, the mount 104 may have a number of pairs of legs like legs 126, 128. In other examples, the mount 104 may have one leg of the form of leg 126 and a plurality of legs of the form of leg 128.

Each of the legs 126,128 have at their lower end, an interface flange 129 which permits the lower ends of the legs to be fixed to an engine casing, for example with a bolted connection (not shown).

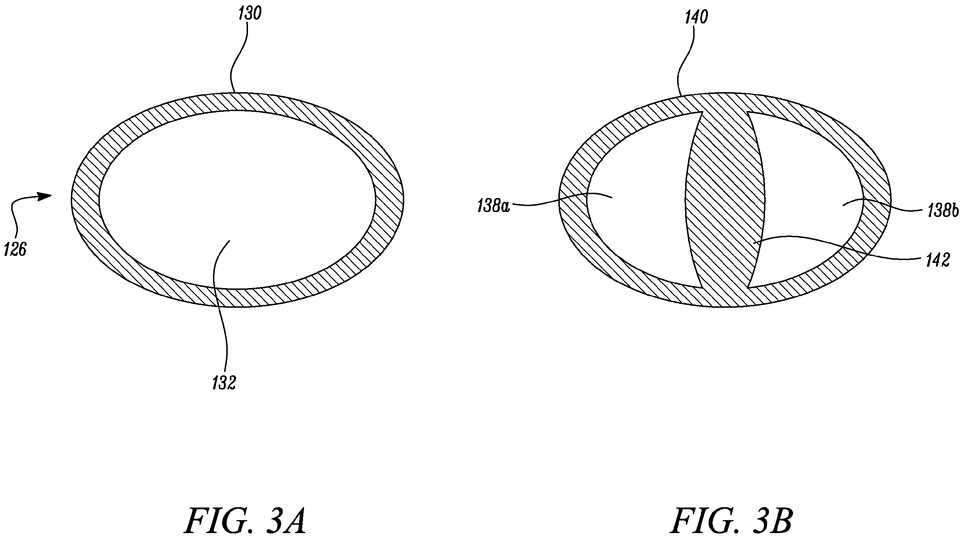

Now referring also to Figure 3A, which shows a cross section through the first leg 126 along the line A-A, it can be seen that the first leg comprises an annular wall 130 which defines an internal passageway 132 along the length of the leg 126. The leg 126 is open at its bottom end, which will be fixed to the engine casing, such that an inlet 134 into the internal passageway 132 is provided.

The internal passageway 132 of the first leg 126 provides a flow path by which cooling air can travel up the leg 126 from the inlet 134 to the upper end of the leg 126.

A shown in Figure 2, the structural framework 108 further comprises a lateral passageway 136 which extends between the upper ends of the first and second legs 126,128. The internal passageway 132 of the first leg 126 is connected in series with the lateral passageway 126 such that cooling air can flow from the first leg 126 to the upper end of the second leg 128.

At the upper end of the second leg 128, the lateral passageway 136 is connected to an internal passageway 138 of the second leg 128. Referring also to Figure 3B, a cross section of the second leg 128 is shown.

The second leg 128 comprises an annular wall 140. However, unlike the first leg 126, the second leg 128 also comprises a central dividing wall 142. The dividing wall 142 divides the second leg 128 along substantially its entire length into a first passage 138a and a second passage 138b. The first and second passages 138a, b together form the internal passageway 138 of the second leg 128.

As can be seen in Figure 1, the dividing wall 142 separates the first and second passages 138a, b from the upper end of the leg 128 but does not extend entirely to the lower end of the leg 128. Accordingly, the first and second passages 138a, b are in communication at the lower end of the second leg 128, but are separated along the rest of the length of the leg 128.

The lateral passageway 136 is connected to the upper end of the first passage 138a. Accordingly, cooling air can flow from the lateral passageway 136 into the upper end of the second leg 128 and then down to the lower end of the second leg 128 in the first passage 138a. As the second passage 138b is connected to the first passage 138a at the lower ends thereof, the cooling airflow can then pass back up the second leg 128 in the second passage 138b. The upper end of the second passage 138a is connected to the interior cavity 112 of the unit interface 106 such that cooling air flows from the second passage 138b into the interior cavity 112.

In an alternative configuration, the first or second passage is a helical passage which extends along of the second leg and the other of the first and second passage is a linear passage which extend back along the leg through the centre of the helical passage (i.e. encircled by the helix). Such an arrangement could serve to introduce swirl into the fluid flow at the outlet into interior cavity 112 and so improve diffusion and distribution of cooling air at the unit interface surface 120

As discussed above, the upper wall 118 of the unit interface 106 comprises a plurality of cooling apertures 124 in the form of an array. The cooling air which enters the internal cavity 112 from the second leg 128 may circulate within the internal cavity 112 and is then forced out of the cooling apertures 124 by displacement due to more cooling air entering the internal cavity 112.

Thus, the passageways 132, 136 and 138 of the structural framework 108 together form a cooling conduit for delivering cooling air from an air source to the internal cavity 112 of the unit interface 106 for cooling the unit 102 and the unit interface 106. The direction of cooling airflow throughout the mount 104 is generally shown with arrows in Figure 2. Furthermore, as the cooling conduit extends in series through both legs 126,128 of the structural framework 108 and can therefore provide a cooling effect to the entire structural framework 108 itself. In some examples, further cooling apertures may be provided either in the structural framework 108, or in the unit interface 106 to direct cooling airflow to other parts of the unit 102 or mount 104.

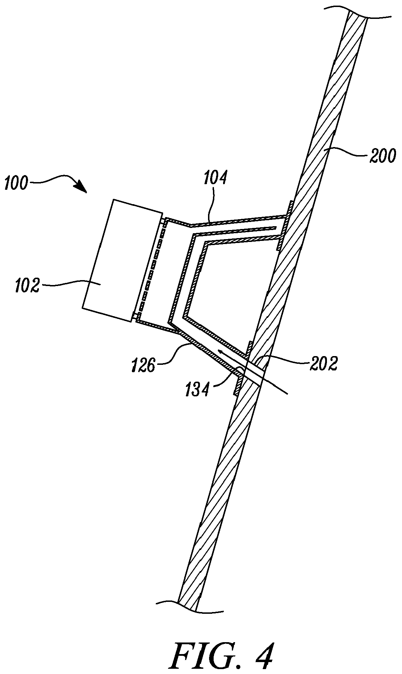

**Figure 4** shows a schematic sectional view of the unit mount apparatus 100 of Figure 1 located on an engine housing 200. Only a small portion of the housing 200 is shown, but it should be understood that the housing 200 could be an inner or outer housing 23, 24 discussed in relation to Figure 1.

The interface flanges 129 are located against the surface of the housing 200 and secured in place, for example using bolts or similar.

When correctly located, the inlet 134 of the first leg 126 is aligned with a port 202 in the housing 200. The port 202 provides a source of cooling air into the inlet 134 and therefore to the internal cooling conduit of the mount as discussed above. The port 202 may, for example, be a compressor bleed port which provides a flow of relatively cool air from one of the compressors 14, 15 shown in Figure 1. In other examples, the inlet 134 and the air source may be arranged differently. For example, the inlet 134 could instead be provided in the wall 130 of the first leg 126 and the air could be provided by external piping. However, the configuration shown in Figure 4 advantageously provides that the securing of the mount 104 and the connection of the air source to the mount can be conveniently achieved in a single step.

The cooling enabled by the mount 104 provides temperature control to both the unit 102 and the mount 104 itself. Accordingly, the unit mount assembly 100 described herein may be particularly suitable for use in hotter parts of the gas turbine engine than would be possible with conventional mounts. Accordingly, the mount 104 may enable the unit 102 to be located optimally with less concern for temperature issues and thereby reduce the amount of complex control and other cabling.

Furthermore, the cooling of the mount 104 may enable lower cost materials to be used in any given situation. In extreme high temperatures, even high-temperature resistant alloys may be unsuitable and a mount 104 may reduce the working temperature within the safe operating range of an existing material. Alternatively, the mount 104 may enable expensive high-temperature resistant alloys to be replaced with cheaper or lighter materials.

Mounts 104 may also be retro-fitted to existing engines any units to replace conventional mounts. For example, if an engine's performance is increased or altered, then this may increase temperature in the engine, which may necessitate additional cooling. In such a case, a new mount 104 of the same structural shape could be formed, but having an internal cooling conduit to thereby bring the temperature for a unit back into a safe operating range.

It will be understood that if it is necessary for the structural framework 108 to have more than two legs, then the cooling conduit can be extended through the further legs by providing further lateral passageways and further legs having the same internal construction as the second leg 128. Thus, a single cooling conduit can extend through every single leg of the structural framework to the unit interface. Alternatively, multiple cooling conduits can be formed by various combinations of legs having constructions according to first or second legs 126,128.

In some examples, the mount 104, or various parts thereof, may be constructed as a single contiguous component. Additive layer manufacture may be particularly suitable for forming the complex geometries within the structural framework 108, for example.

Accordingly, a method of manufacturing the mount 104 may comprise producing the unit interface 106, preferably by additive layer manufacture, and producing the structural framework 108 by additive layer manufacture. The unit interface 106 and the structural framework 108 may be manufactured separately and subsequently connected, or they may be manufactured together in the same process.

Additive layer manufacturing may enable the internal cooling conduit and the passageways forming the conduit to be optimised to reduce pressure losses by forming organic or smooth geometries, which may not be possible with conventional manufacturing techniques.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A mount (104) for a gas turbine engine unit (102) comprising:
a unit interface (106) for securing a unit to the mount (104), the unit interface (106) comprising an internal cavity (112) in communication with a cooling aperture (124) to be overlaid by a unit secured to the unit interface (106); and
a structural framework (108) for securing the mount (104) to a gas turbine engine (10), the structural framework comprising an internal cooling conduit (132, 136, 138) for delivering cooling airflow from an air source to the internal cavity (112) of the unit interface (106).

2. A mount (104) for a gas turbine engine unit (102) as claimed in claim 1, wherein the structural framework (108) comprises a plurality of legs (126,128), each of the plurality of legs having a first end attached to the unit interface and a second end for securing to a gas turbine engine (10), optionally wherein the cooling conduit (132, 136, 138) extends through one or more of the plurality of legs (126,128),

3. A mount (104) for a gas turbine engine unit (102) as claimed in claim 2, wherein:
at least one of the plurality of legs (128) comprises an internal passageway (138) having an inlet and an outlet, both the inlet and outlet being located at the same end of the leg (128); and
the cooling conduit extends from the air source to the internal cavity via the internal passageway (138) of the second leg, optionally wherein the internal passageway (138) comprises a single inlet and single outlet both being located at the same end of the leg (128).

4. A mount (104) for a gas turbine engine unit (102) as claimed in claim 3, wherein the internal passageway (138) extends from the inlet to the outlet along a path which extends along substantially an entire length of the leg (128).

5. A mount (104) for a gas turbine engine unit (102) as claimed in claim 3 or 4, wherein the internal passageway (138) comprises a first passage (138a) for directing cooling air in a first direction along the leg and a second passage (138b) connected in series with the first passage (138a) for directing cooling air in a second direction along the leg (128), optionally wherein the first and second passages (138a,138b) are substantially linear passages which extend in an axial direction along the leg (128), or optionally wherein one of the first and second passages (138a,138b) is a helical passage and the other of the first and second passages is an axial passage which extends in an axial direction along the leg (128), and optionally wherein the axial passage extends within a helix of the helical passage.

6. A mount (104) for a gas turbine engine unit (102) as claimed in any preceding claim, wherein the mount (104) further comprises one or more bosses (122) for spacing a unit apart from an interface surface (120) of the unit interface (106).

7. A mount (104) for a gas turbine engine unit (102) as claimed in any preceding claim, wherein the unit interface (106) comprises an interface surface (120) to be overlaid by a unit, the interface surface (120) comprising an array of cooling apertures (124) arranged to deliver cooling air from the internal cavity (112) onto a unit secured to the unit interface (106).

8. A mount (104) for a gas turbine engine unit (102) as claimed in any preceding claim wherein the unit is one or more of an electronic unit, an engine control unit, or an engine system control unit.

9. A unit mount apparatus (100) comprising:
a mount (104) according to any of preceding claims; and
a unit (102) secured to the unit interface (106) of the mount (104).

10. A gas turbine engine (10) comprising a mount (104) according to any one of claims 1-8 or a unit mount apparatus (100) according to claim 9.

11. A gas turbine engine (10) as claimed in claim 10, wherein the mount (104) or unit mount apparatus (100) is attached to an engine casing of the gas turbine engine (10).

12. A gas turbine engine (10) as claimed in claim 10 or 11, wherein the gas turbine engine (10) is configured to deliver cooling air to an inlet (134) of the internal cooling conduit (132, 136, 138).

13. A method of manufacturing a mount (104) for a gas turbine engine unit (102) comprising:
producing a unit interface (106) for securing a unit to the mount (104), the unit interface (106) being configured to deliver cooling air from an internal cavity (112) onto a unit secured to the unit interface (106); and
producing, using additive layer manufacturing, a structural framework (108) for securing the mount (104) to a gas turbine engine (10), the structural framework (108) comprising an internal cooling conduit (132, 136, 138) for delivering cooling airflow from an air source to the internal cavity (112) of the unit interface (106).

14. A method of manufacturing a mount (104) for a gas turbine engine unit (102) according to claim 13, wherein the step of producing the unit interface comprises the use of additive layer manufacturing.

15. A method of manufacturing a mount (104) for a gas turbine engine unit (102) according to claim 14, wherein the unit interface and the structural framework are produced using the same additive layer manufacturing process.
